# EUROPÄISCHE PATENTSCHRIFT

(11) **EP 1 518 966 B1**
(45) Veröffentlichungstag und Bekanntmachung des Hinweises auf die Patenterteilung: **22.03.2006**
(21) Anmeldenummer: 04021653.3
(22) Anmeldetag: 11.09.2004
(51) Int. Cl.: E01H 5/06, E01H 5/08, E01H 1/02, B60Q 1/18, B60Q 1/26

(54) **Kommunales Strassen- und Winterdienstfahrzeug**
Road maintenance and winter service communal vehicle
Véhicule communal pour l'entretien des routes et le service d'hiver

(30) Priorität: 29.09.2003 AT 15332003
(43) Veröffentlichungstag der Anmeldung: 30.03.2005
(73) Patentinhaber: MAN Nutzfahrzeuge Österreich AG, 1230 Wien (AT)
(72) Erfinder: Allmann, Christian, Ing., 1190 Wien (AT)

(56) Entgegenhaltungen:
- WO-A-20/04058538
- DE-A- 2 264 427
- DE-U- 7 911 535
- US-A- 4 962 598
- PATENT ABSTRACTS OF JAPAN Bd. 2003, Nr. 11, 5. November 2003 (2003-11-05) & JP 2003 213644 A (KYOWA KIKAI SEISAKUSHO:KK), 30. Juli 2003 (2003-07-30)
- PATENT ABSTRACTS OF JAPAN Bd. 1998, Nr. 14, 31. Dezember 1998 (1998-12-31) -& JP 10 230776 A (MITSUBISHI AUTOMOB ENG CO LTD; MITSUBISHI MOTORS CORP), 2. September 1998 (1998-09-02)

## Beschreibung

Die Erfindung betrifft ein kommunales Straßen- und Winterdienstfahrzeug mit gattungsgemäßen Merkmalen der im Oberbegriff des Anspruches 1 angegebenen Art.

Solche Straßen- und Winterfahrzeuge werden von vielen Kommunen zum Erhalt sowie zur Reinigung und Pflege ihrer Straßen benützt. Fahrzeuge dieser Art basieren in der Regel auf einem standardmäßigen Lkw-Fahrgestell. Wenn an diesem vorne z. B. ein Schneepflug angebaut ist, verdeckt dieser die serienmäßig in den Stoßfänger integrierten Scheinwerfer und Blinkleuchten. Außerdem lässt sich dann in der Regel die an der Frontwand standardmäßig gegebene Frontklappe für Fahrzeugwartung nicht mehr öffnen. Ferner ragt der Schneepflug beiderseits über die Fahrzeugbreite hinaus, wodurch entsprechend länderspezifischer Vorschriften sogenannte Breitenweiser oder Peilstangen notwendig werden. Bisher wurde diesen Umständen durch folgende Maßnahmen an den Straßen- und Winterdienstfahrzeugen abgeholten: Es wurden Zusatzscheinwerfer entweder direkt unterhalb der Windschutzscheibe oder am Fahrerhausdach angebracht. Ebenso wurden Zusatzblinkleuchten unterhalb der Windschutzscheibe an der Fahrerhausfrontwand angebracht. Breitenweiser bzw. Peilstäbe, insbesondere solche mit Positions-/Rücklicht und Blinkleuchte, wurden entweder seitlich am Fahrerhaus oder am jeweiligen überbreiten Anbaugerät angebracht. Anstelle einer standardmäßigen wurde eine geteilte Frontklappe an einer anderen Fahrerhaus-Frontwand verwendet. Diese Maßnahmen verteuern das Fahrzeug efieblich.

Es ist daher Aufgabe der Erfindung, bei einem kommunalen Straßen- und Winterdienstfahrzeug der gattungsgemäßen Art solche Veränderungen vorzunehmen, dass die äußeren Anbauten einfacher und billiger realisierbar sind.

Diese Aufgabe ist erfindungsgemäß entsprechend dem Kennzeichen des Anspruches 1 dadurch gelöst, dass jede der beiden Eckblenden über ihre eigentliche Funktion als Verkleidungsteil, gegebenenfalls auch Windleitteil hinaus auch noch als Träger eines Zusatzscheinwerfers und/oder eines Peil-/Breitenweiser-Stabes und/oder einer Zusatzblinkleuchte und/oder von Lagerorganen, an denen die Frontklappe über einen Ausstellmechanismus angelenkt ist, vorgesehen und entsprechend ausgebildet sowie ausgestattet ist.

Vorteilhafte Details oder Ausgestaltungen der Erfindung sowie Alternativbeispiele sind in den Unteransprüchen gekennzeichnet.

Der größte Nutzen bzw. Einsparungseffekt wird bei Umsetzung der Erfindung in die Praxis dann erzielt, wenn jede der beiden Eckblenden auch als Träger für einen Zusatzscheinwerfer und eine Zusatzblinkleuchte und einen Peil-/Breitenweiser-/Stab und die Lagerorgane für die Anlenkung der Frontklappe über deren Ausstellmechanismus dient und entsprechend ausgebildet sowie ausgestattet ist.

Die solchermaßen ergänzten Eckbtenden basieren hinsichtlich ihrer Grundkonstruktion auf jenen Eckblenden, wie sie für serienmäßige Lastkraftwagen gleichen Baumusters verwendet werden, und sind konstruktiv so ausgeführt, dass sie jederzeit einfach und mit geringem Zeitaufwand gegen die vorgenannten serienmäßigen Eckblenden ausgetauscht werden können. Außerdem ist keine andere Fahrerhaus-Frontwand und auch keine andere Frontklappe als die serienmäßige notwendig, weil die serienmäßige Frontklappe lediglich mit anderen Lagerorganen auszustatten ist, mit denen sie dann z. B. an einem Parallelogramm-Gestänge, welches den Ausstellmechanismus bildet, anlenkbar ist, das andererseits in den Eckblenden gelagert ist und so ein frontwandnahes paralleles Öffnen der Frontklappe und Hochführen derselben in Öffnungsendposition ermöglicht. Außerdem genügt es nun, je Eckblende nur einen zu dieser hingeführten Kabelstrang vorzusehen, um alle an ihr angeordneten Lichtquellen mit elektrischer Energie sowie Schaltsignalen zu versorgen. Zum Vergleich: Bisher waren mindestens vier, evtl. sogar sechs Kabel für die Stromversorgung der beiden Zusatzscheinwerfer, beiden Zusatzblinkleuchten und Licht-/Blink-/Kombinationen an den beiden Peil-/Breitenweiser-Stäben notwendig.

Über diese Vorteile hinaus stellen sich die erfindungsgemäß ergänzten bzw. ausgestatteten Eckblenden als optisch gut mit dem Design des Fahrerhauses harmonierende Bauteile dar.

Nachstehend ist die erfindungsgemäße Lösung anhand der Zeichnung noch näher erläutert.

In der Zeichnung zeigen:
- Fig. 1: ein kommunales Straßen- und Winterdienstfahrzeug in Vorderansicht (ohne Universal-Geräteanbauplatte und ohne Anbaugerät) mit einem Ausführungsbeispiel der erfindungsgemäßen Lösung, wobei ein eckblendenintegraler Peil-/Breitenweiser-Stab in der linken Zeichnungshälfte in ausgeschwenkter Position und in der rechten Zeichnungshälfte in Nichtgebrauchslage gezeigt ist,
- Fig. 2: das Fahrzeug gemäß Fig. 1 in Seitenansicht, und
- Fig. 3: ein anderes kommunales Straßen- und Winterdienstfahrzeug in Seitenansicht (ohne Universal-Geräteanbauplatte und ohne Anbaugerät) mit einem weiteren Ausführungsbeispiel der Erfindung und einer in Öffnungsendposition gezeigten Frontklappe.

Das dargestellte kommunale Straßen- und Winterdienstfahrzeug basiert auf einem Lastkraftwagen, an dessen Fahrgestell vorne oben ein Frontlenker-Fahrerhaus 1 und frontseitig Stoßfänger 2 mit integrierten Scheinwerfern 3,4 und Blinkleuchten 5,6 sowie davor eine nicht dargestellte Universalgeräteanbauplatte angebaut sind, letztere zum Beispiel in der Weise, wie mit dem AT-Patent 409619 oder EP-Patent 1177970 geschützt. An dieser Universal-geräteanbauplatte sind wahlweise je nach Bedarf die verschiedensten Anbaugeräte wie Schneepflug, Schneefräse, Schneeschleuder, Kehrbesen, Mähgerät, Leitpfostenwaschanla- . ge, Räum-Kehr-Einheit mit oder ohne Streuaufsatz, etc. montierbar.

Das Fahrerhaus 1 weist am Übergang von seiner Frontwand 7 zu jeweils einer der beiden Seitenwände 8 9 jeweils eine Eckblende 10,11 auf. Außerdem sind am Fahrerhaus 1 in einer gegenüber den Scheinwerfern 3,4 höheren Position Zusatzscheinwerfer 12,13 vorgesehen. An der Frontwand 7 des Fahrerhauses 1 ist eine Frontklappe 14 gegeben, die im Raum dahinter untergebrachte Fahrzeugaggregate und Wartungsstellen abdeckt und über einen Ausstellmechanismus 15 geführt aus ihrer Schließlage in eine angehobene Öffnungsposition und zurück bewegbar ist. Am Fahrzeug ist auch noch ein linker und rechter Peil-/Breitenweiser-Stab 16 bzw. 17 vorgesehen, der jeweils aus einer im wesentlichen vertikalen Nichtgebrauchslage in eine Gebrauchslage quer ausschwenkbar ist und an seinem äußeren freien Ende eine kombinierte Positions-/Blinkleuchte 18 bzw. 19 aufweist.

Erfindungsgemäß ist jede der beiden Eckblenden 10,11 über ihre eigentliche Funktion als A-Säulen-Verkleidungsteil und gegebenenfalls Windleitteil hinaus auch noch als Träger eines Zusatzscheinwerfers 12 bzw. 13 und/oder eines Peil-/Breitenweiser-Stabes 16 bzw. 17 und/oder einer Zusatzblinkleuchte 20 bzw. 21 und/oder von Lagerorganen 22 bzw. 23, an denen die Frontklappe 14 über den Ausstellmechanismus 15 angelenkt ist, vorgesehen und entsprechend ausgebildet sowie ausgestattet.

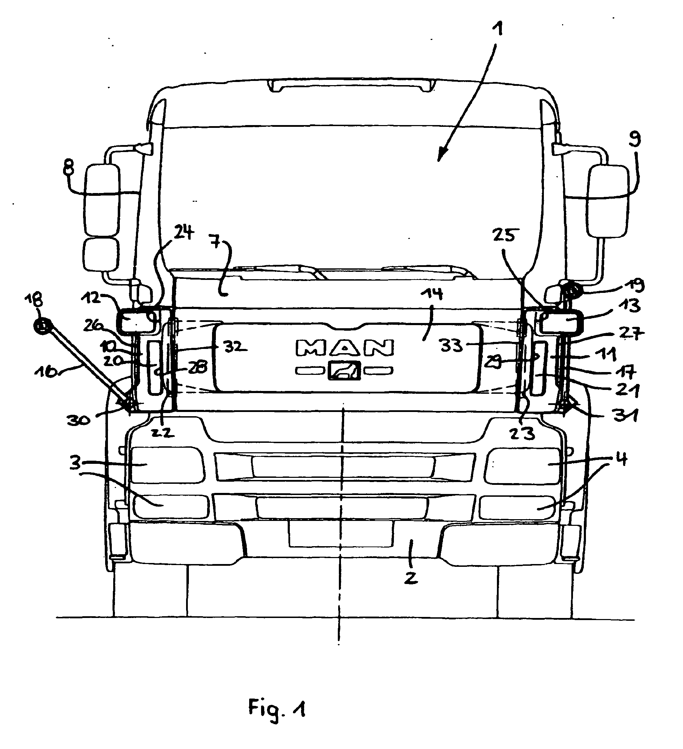

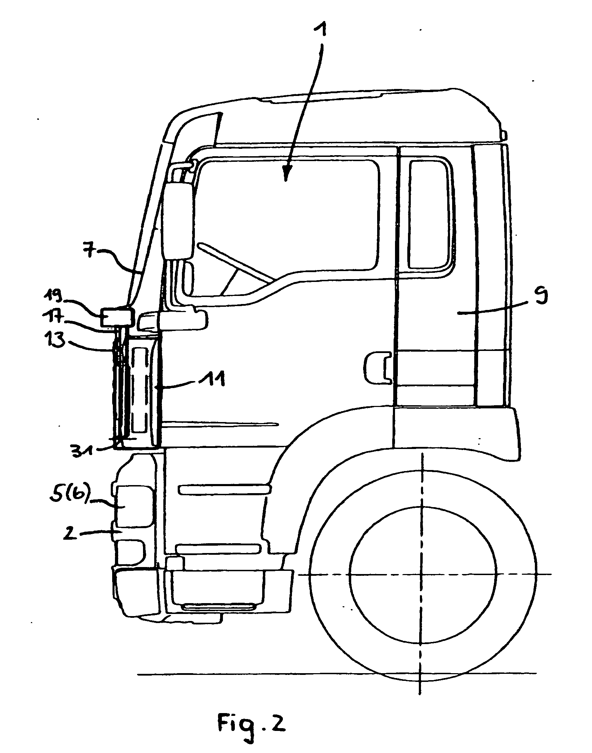

Die Ausführungsform der Erfindung gemäß Fig. 1 und 2 vereinigt in jeder der beiden Eckblenden 10,11 alle vorgenannten Anbauteile in "UND"-Funktion. Dabei kann ein Zusatzscheinwerfer 12 bzw. 13 vorne an jeder der beiden Eckblenden 10,11 angebaut und auch ― wie dargestellt ― räumlich in dieser integriert sein. Hierfür weist jede der beiden Eckblenden 10,11 beispielsweise in ihrem oberen Bereich eine nach vorne offene schalenförmige Einbuchtung bzw. Ausformung 24 bzw. 25 auf, in die ein Zusatzscheinwerfer 12 bzw. 13 vorzugsweise zumindest annähernd frontbündig eingebaut ist. Wie aus Fig. 1 gut ersichtlich, überragt dabei die Einbuchtung bzw. Ausformung 24 bzw. 25 in jeder Eckblende 10,11 deren sonstige seitliche Kontur 26 bzw. 27 partiell. Eine Zusatzblinkleuchte 20 bzw. 21 ist an jeder der beiden Eckblenden 10.11 vorzugsweise vorne angebaut und dabei vorzugsweise auch in jede Eckblende 10,11 räumlich integriert. Hierfür ist in jeder Eckblende 10,11 vorzugsweise knapp unterhalb des Anbringungsortes für einen Zusatzscheinwerfer 12 bzw. 13 eine nach vorne offene schalenförmige Vertiefung bzw. Einbuchtung 28 bzw. 29 vorgesehen, in die die Zusatzblinkleuchte 20 bzw. 21 vorzugsweise zumindest annähernd frontbündig eingebaut ist.

Ferner ist an jeder der beiden Eckblenden 10,11, dort an deren unterem Bereich, eine Lagerstelle 30 bzw. 31 für die Lagerung eines dort mit seinem unteren Ende quer ausschwenkbar angelenkten Peil-/Breitenweiser-Stabes 16 bzw. 17 gegeben. Jede dieser Lagerstellen 30 bzw. 31 kann an jeder Eckblende 10,11 durch Vorsprünge, die deren sonstige Kontur 26 bzw. 27 seitlich partiell überragen, gebildet sein, zwischen denen ein Peil-/Breitenweiser-Stab 16 bzw. 17 mit einem untenendigem Lagerorgan um eine Lagerachse schwenkbar aufgenommen ist. Jeder Lagerstelle 30 bzw. 31 ist ein Anschlag zugeordnet, der das Ausschwenken des zugehörigen Peil-/Breitenweiser-Stabes 16 bzw. 17 in einer bestimmten Stellung, z. B. 45° Schräglage zur Horizontalen, begrenzt. Ein solcher Anschlag kann z. B. durch eine vorspringende Nase an einem oder beiden der die Lagerstellen bildenden Vorsprünge oder einen Verbindungssteg oder Verbindungsstift zwischen den beiden Vorsprüngen realisiert sein.

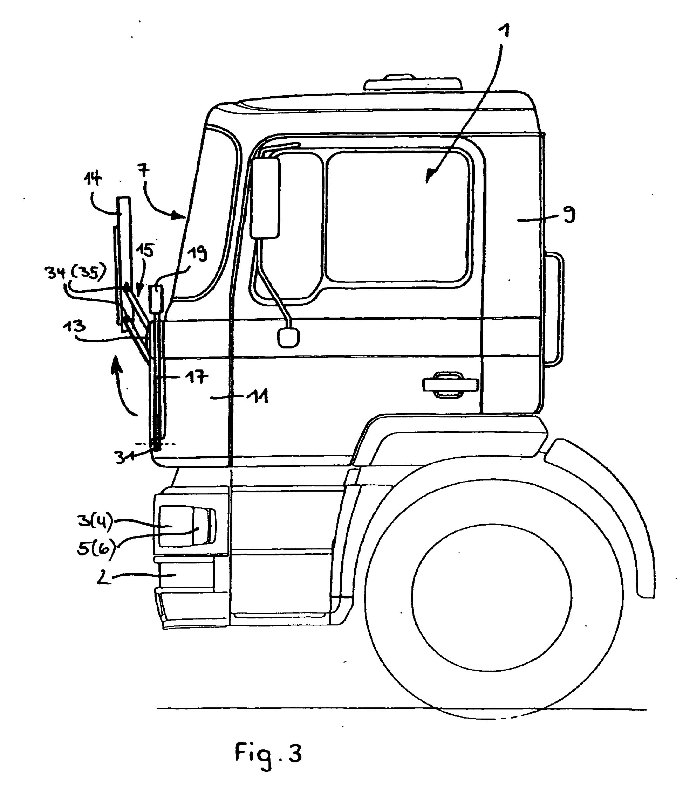

Die Lagerorgane 22 bzw. 23 für die Anlenkung des Frontklappen-Ausstellmechanismus 15 sind an der Rückseite jeder der beiden Eckblenden 10,11, zu deren innenendigem Rand 32 bzw. 33 hin gerückt, angeordnet. Der Ausstellmechanismus 15 kann z. B. - siehe Fig. 3 - durch je Seite ein Parallelogramm-Gestänge gebildet sein, dessen Stangen einerseits an den eckblendenseitigen Lagerorganen 22,23 und andererseits an frontklappenseitigen Lagerorganen 34 bzw. 35 angelenkt sind, derart, dass die Frontklappe 14 beim Öffnen aus ihrer Schließlage zunächst etwas von der Frontwand 7 weg bewegbar und dann etwa parallel zur Frontwand 7 in eine höherlagige Öffnungsendposition überführbar ist. Eine andere Möglichkeit für die Ausgestaltung eines Ausstellmechanismus für eine Frontklappe kann durch jene gemäß dem AT-Patent 410 655 wahrgenommen werden.

Die Eckblenden 10,11 selbst sind aus geeignetem, gegebenenfalls faserverstärkten Kunststoff hergestellt. Die an ihnen angebauten Zusatzscheinwerfer 12,13 und Zusatzblinkleuchten 20,21 und peilstabendigen Positions-/Blinkleuchten 18,19 stehen über entsprechende Kabelstränge mit einer bordinternen Stromversorgung bzw. Blinksteuerung in Verbindung.

## Patentansprüche

1. Kommunales Straßen- und Winterdienstfahrzeug, basierend auf einem Lastkraftwagen, an dessen Fahrgestell oben ein Frontlenker-Fahrerhaus (1) sowie frontseitig ein Stoßfänger (2) mit integrierten Scheinwerfern (3,4) und Blinkleuchten (5,6) sowie eine Universal-Geräteanbauplatte angebaut sind, an der wahlweise, je nach Bedarf, die verschiedensten Anbaugeräte wie Schneepflug, Schneefräse, Schneeschleuder, Kehrbesen, Mähgerät, Leitpfostenwaschanlage, Räum-Kehr-Einheit mit oder ohne Streuaufsatz, etc. montierbar sind, wobei am Fahrerhaus am Übergang von der Frontwand (7) zu einer Seitenwand (8,9) jeweils eine Eckblende (10,11) sowie in erhöhter Position Zusatzscheinwerfer (12,13) und Zusatzblinkleuchten (20,21) vorgesehen sind, wobei ferner an der Frontwand eine Frontklappe (14) angeordnet ist, die über einen Ausstell-mechanismus (15) geführt aus ihrer Schließlage in eine angehobene Öffnungsposition und zurück bewegbar ist, und wobei am Fahrzeug links- und rechtsseitig je ein aus einer im wesentlichen vertikalen Nichtgebrauchslage in eine Gebrauchslage quer ausschwenkbarer Peil-/Breitenweiser-Stab (16,17) vorgesehen ist, der an seinem äußeren freien Ende eine kombinierte Positions-/Blinkleuchte (18,19) aufweist, **dadurch gekennzeichnet, dass** jede der beiden Eckblenden (10,11) über ihre eigentliche Funktion als Verkleidungsteil, gegebenenfalls auch Windleitteil hinaus auch noch als Träger eines Zusatzscheinwerfers (12,13) und/oder eines Peil-/Breitenweiser-Stabes (16,17) und/oder einer Zusatzblinkleuchte (20,21) und/oder von Lagerorganen (22,23), an denen die Frontklappe (14) über einen Ausstellmechanismus (15) angelenkt ist, vorgesehen und entsprechend ausgebildet sowie ausgestattet ist.

2. Straßen- und Winterdienstfahrzeug nach Anspruch 1, **dadurch gekennzeichnet, dass** an jede der beiden Eckblenden (10,11) vorne ein Zusatzscheinwerfer (12,13) angebaut ist.

3. Straßen- und Winterdienstfahrzeug nach einem der Ansprüche 1 und 2, **dadurch gekennzeichnet, dass** in jede der beiden Eckblenden (10,11) ein Zusatzscheinwerfer (12,13) räumlich integriert ist.

4. Straßen- und Winterdienstfahrzeug nach Anspruch 3, **dadurch gekennzeichnet, dass** jede der beiden Eckblenden (10,11) in ihrem oberen Bereich eine nach vorne offene schalen-förmige Einbuchtung bzw. Ausformung (24,25) aufweist, in die ein Zusatzscheinwerfer (12,13) zumindest annähernd frontbündig eingebaut ist.

5. Straßen- und Winterdienstfahrzeug nach Anspruch 4, **dadurch gekennzeichnet, dass** die Einbuchtung bzw. Ausformung (24,25) in bzw. an jeder der beiden Eckblenden (10,11) deren sonstige seitliche Kontur (26,27) außen partiell überragt.

6. Straßen- und Winterdienstfahrzeug nach einem der Ansprüche 1 bis 5, **dadurch gekennzeichnet, dass** an jede der beiden Eckblenden (10,11) vorne eine Zusatzblinkleuchte (20,21) angebaut ist.

7. Straßen- und Winterdienstfahrzeug nach einem der Ansprüche 1 bis 6, **dadurch gekennzeichnet, dass** in jede der beiden Eckblenden (10,11) eine Zusatzblinkleuchte (20,21) räumlich integriert ist.

8. Straßen- und Winterdienstfahrzeug nach Anspruch 7, **dadurch gekennzeichnet, dass** jede der beiden Eckblenden (10,11) vorzugsweise im Bereich unterhalb des Anbringungsortes für den Zusatzscheinwerfer (12,13) eine nach vorne offene schalenförmige Einbuchtung bzw. Vertiefung (28,29) aufweist, in eine Zusatzblinkleuchte (20,21) zumindest annähernd frontbündig eingebaut ist.

9. Straßen- und Winterdienstfahrzeug nach einem der Ansprüche 1 bis 8, **dadurch gekennzeichnet, dass** an jeder der beiden Eckblenden (10,12), dort an deren unteren Bereich, eine Lagerstelle (30,31) für die Lagerung eines dort an seinem unteren Ende quer angelenkten Peil-/Breitenweiser-Stabes (16,17) gegeben ist.

10. Straßen- und Winterdienstfahrzeug nach Anspruch 9, **dadurch gekennzeichnet, dass** die Lagerstelle (30,31) für die Anlenkung eines Peil-/Breitenweiser-Stabes (16,17) an jeder der beiden Eckblenden (10,11) durch deren sonstige Kontur (26,27) seitlich partiell überragende Vorsprünge gebildet ist.

11. Straßen- und Winterdienstfahrzeug nach Anspruch 10, **dadurch gekennzeichnet, dass** jeder Peil-/Breitenweiser-Stab (16,17) mit einem untenendigen Lagerange zwischen den beiden seitlichen Vorsprüngen der Lagerstelle (30,31) an jeder Eckblende (10,11) um eine Lagerachse schwenkbar aufgenommen ist, und dass an wenigstens einem der beiden Vorsprünge seitlich außen oder durch einen seitlich äußeren Verbindungssteg oder -stift zwischen den beiden Vorsprüngen ein Anschlag angegeben ist, der das Ausschwenken des Peil-/Breitenweiser-Stabes (16,17) in eine Schräglage, z. B. 45° zur Horizontalen, begrenzt.

12. Straßen- und Winterdienstfahrzeug nach einem der Ansprüche 1 bis 11, **dadurch gekennzeichnet, dass** die Lagerorgane (22,23) für die Anlenkung des Frontklappen-Ausstellmechanismus (15) an der Rückseite jeder der beiden Eckblenden (10,11), zu deren innenendigem Rand (32,33) hin gerückt, angeordnet sind, dass der Frontklappen-Ausstellmechanismus (15) durch je Seite ein Parallelogramm-Gestänge gebildet ist, dessen Stangen einerseits an den eckblenden-seitigen Lagerorganen (22,23) und andererseits an frontklappen-seitigen Lagerorganen (34,35) angelenkt sind, derart, dass die Frontklappe (14) beim Öffnen aus ihrer Schließlage zunächst etwas von der Frontwand weg bewegbar und dann etwa parallel zur Frontwand (7) in eine höherlagige Öffnungsendposition überführbar ist.

13. Straßen- und Winterdienstfahrzeug nach einem der vorhergehenden Ansprüche 1 bis 12, **dadurch gekennzeichnet, dass** die Eckblenden (10,11) aus geeignetem, gegebenenfalls faserverstärkten Kunststoff hergestellt sind.

## Claims

1. Public-utility road and winter-service vehicle based on a truck to whose chassis a forward-control cab (1) is mounted on top and to whose front a bumper (2) with integrated headlights (3, 4), flasher lamps (5, 6) and a universal equipment attachment plate are fitted, to which attachment plate the most varied attachment devices such as a snow plough, rotary snow plough, snow blower, rotary brush, mower, guardpost washing system, clearing/sweeping unit with or without gritter unit etc can be optionally fitted as required, whereby a corner panel (10, 11) and, at an elevated position, auxiliary headlights (12, 13) and auxiliary flasher lamps (20, 21) are provided on the cab in the transition area from the front wall (7) to each side wall (8, 9), whereby, in addition, a front flap (14) is provided on the front wall and can be guided via an extension mechanism (15) from its closed position to an elevated opened position and be returned and whereby on the left- and righthand sides of the vehicle a width indicator rod (16, 17) is provided, can be slewed out in transverse direction from its essentially vertical non-use position to a use position and has at its outer free end a combined position/flasher lamp (18, 19), **characterised in that** beyond its proper function as a cladding part and, if necessary, also as a wind deflector part, each of the two corner panels (10, 11) is provided and correspondingly designed and equipped as a carrier of an auxiliary headlight (12, 13) and/or of a width indicator rod (16, 17) and/or of an auxiliary flasher lamp (20, 21) and/or of carrier organs (22, 23) on which the front flap (14) can be located via an extension mechanism (15).

2. Road and winter-service vehicle according to Claim 1, **characterised in that** an auxiliary headlight (12, 13) is fitted to the front side of each of the corner panels (10, 11).

3. Road and winter-service vehicle according to one of the Claims 1 and 2, **characterised in that** an auxiliary headlight (12, 13) is spatially integrated in each of the two corner panels (10, 11).

4. Road and winter-service vehicle according to Claim 3, **characterised in that** the upper area of each of the two corner panels (10, 11) is provided with a shell-type recess (24, 25) which is open towards the front and in which an auxiliary headlight (12, 13) is installed at least approximately flush with the front.

5. Road and winter-service vehicle according to Claim 4, **characterised in that** on the outside the recess (24, 25) in and on each of the two corner panels (10, 11) partially overlaps the lateral contour (26, 27) of said panels (10, 11).

6. Road and winter-service vehicle according to one of the Claims 1 to 5, **characterised in that** an auxiliary flasher lamp (20, 21) is fitted to the front of each of the two corner panels (10, 11).

7. Road and winter-service vehicle according to one of the Claims 1 to 6, **characterised in that** an auxiliary flasher lamp (20, 21) is spatially integrated in each of the two corner panels (10, 11).

8. Road and winter-service vehicle according to Claim 7, **characterised in that** each of the two corner panels (10, 11) features a shell-type recess (28, 29) which is arranged preferably in the area below the attachment point for the auxiliary headlight (12, 13) and is open towards the front and in which an auxiliary flasher lamp (20, 21) is installed approximately flush with the front.

9. Road and winter-service vehicle according to one of the Claims 1 to 8, **characterised in that** the lower area of each of the two corner panels (10, 12) is provided with a bearing point (30, 31) for supporting a width indicator rod (16, 17) whose lower end is transversely located on said bearing point (30, 31).

10. Road and winter-service vehicle according to Claim 9, **characterised in that** the bearing point (30, 31) for locating a width indicator rod (16, 17) on each of the two corner panels (10, 11) is provided in the form of protrusions partially projecting beyond the lateral contour (26, 27) of said corner panels (10, 11).

11. Road and winter-service vehicle according to Claim 10, **characterised in that** a bearing eye at the lower end of each of the width indicator rods (16, 17) can be slewed about a bearing axis and is supported between the two lateral projections of the bearing point (30, 31) on each corner panel (10, 11) and that a stop is laterally provided on the outside of at least one of the two protrusions or in the form of a lateral outer connection web or pin between the two protrusions, which stop limits the width indicator rod (16, 17) in respect of its slewing into an oblique position, eg to 45° relative to the horizontal line.

12. Road and winter-service vehicle according to one of the Claims 1 to 11, **characterised in that** the bearing organs (22, 23) for locating the front-flap extension mechanism (15) are arranged on the rear side of the each of the two corner panels (10, 11) and moved towards the inner-end edge (32, 33), that the front-flap extension mechanism (15) is provided in the form of a parallelogram-type linkage on each side, the bars of which linkage are located on the corner-panel-mounted bearing organs (22, 23) on the one hand and on the front-flap-mounted bearing organs (34, 35) on the other, so that, during opening, the front flap (14) can first be moved somewhat away from the front wall and then be brought into an opening end position at a higher level and approximately parallel to the front wall (7).

13. Road and winter-service vehicle according to one of the foregoing Claims 1 to 12, **characterised in that** the corner panels (10, 11) are made of a suitable, if necessary fibre-reinforced, synthetic material.

## Revendications

1. Véhicule de voirie d'entretien des chaussées et de service d'hiver, basé sur un camion sur le châssis duquel sont montés une cabine avancée (1) sur le dessus ainsi qu'un pare-chocs (2) à l'avant avec des phares intégrés (3, 4) et des clignotants (5, 6) ainsi qu'une plaque universelle d'adaptation d'appareils sur laquelle peuvent être montés au choix, selon les besoins, les outils les plus divers tels qu'une lame de déneigement, une fraise à neige, une turbine chasse-neige, un balai, un outil de fauchage, une installation de lavage des poteaux indicateurs, une unité de déblaiement/balayage avec ou sans épandeur, etc., auquel cas sont prévus sur la cabine au niveau de la transition de la paroi avant (7) à une paroi latérale (8, 9) à chaque fois un cache cornière (10, 11) ainsi qu'en position relevée, des phares additionnels (12, 13) et des clignotants additionnels (20, 21), auquel cas la paroi avant comporte également un capot avant (14) qui peut être ouvert à partir d'une position fermée dans une position d'ouverture relevée et inversement guidé par le biais d'un mécanisme orientable (15), et auquel cas un indicateur d'encombrement/de largeur (16, 17) pivotable transversalement à partir d'une position verticale de non-emploi dans une position d'emploi est prévu à chaque fois du côté gauche et du côté droit sur le véhicule et cet indicateur d'encombrement/de largeur (16, 17) présente un feu de position/clignotant combiné à son extrémité extérieure libre, **caractérisé en ce que** chacun des caches cornières (10, 11) est prévu de par leur propre fonction comme pièce d'habillage, le cas échéant également comme déflecteur ou encore comme support d'un phare additionnel (12, 13) et/ou d'un indicateur d'encombrement/de largeur (16, 17) et/ou d'un clignotant additionnel (20, 21) et/ou d'organes de palier (22, 23) sur lesquels le capot avant (14) est articulé par le biais d'un mécanisme orientable (15), et est constitué ainsi qu'équipé en conséquence.

2. Véhicule de voirie d'entretien des chaussées et de service d'hiver selon la revendication 1, **caractérisé en ce qu'**un phare additionnel (12, 13) est monté à l'avant sur chaque des deux caches cornières (10, 11).

3. Véhicule de voirie d'entretien des chaussées et de service d'hiver selon l'une des revendications 1 et 2, **caractérisé en ce qu'**un phare additionnel (12, 13) est intégré spatialement dans chacun des deux caches cornières (10, 11).

4. Véhicule de voirie d'entretien des chaussées et de service d'hiver selon la revendication 3, **caractérisé en ce que** chacun des deux caches cornières (10, 11) présente dans sa partie supérieure une rainure ou un développement (24, 25) ouvert vers l'avant et en forme de coque dans lequel/laquelle est monté un phare additionnel (12, 13) au moins approximativement à fleur par rapport à la partie avant.

5. Véhicule de voirie d'entretien des chaussées et de service d'hiver selon la revendication 4, **caractérisé en ce que** la rainure ou le développement (24, 25) dépasse partiellement à l'extérieur, dans ou au niveau de chacun des deux caches cornières (10, 11), de leur autre contour latéral (26, 27).

6. Véhicule de voirie d'entretien des chaussées et de service d'hiver selon l'une des revendications 1 à 5, **caractérisé en ce qu'**un clignotant additionnel (20, 21) est monté à l'avant sur chacun des deux caches cornières (10, 11).

7. Véhicule de voirie d'entretien des chaussées et de service d'hiver selon l'une des revendications 1 à 6, **caractérisé en ce qu'**un clignotant additionnel (20, 21) est intégré spatialement dans chacun des deux caches cornières (10, 11).

8. Véhicule de voirie d'entretien des chaussées et de service d'hiver selon la revendication 7, **caractérisé en ce que** chacun des caches cornières (10, 11) présente de préférence, au niveau de l'emplacement de montage du phare additionnel (12, 13), une rainure ou un évidement (28, 29) ouvert vers l'avant et en forme de coque et est monté au moins approximativement à fleur à l'avant dans un clignotant additionnel (20,21).

9. Véhicule de voirie d'entretien des chaussées et de service d'hiver selon l'une quelconque des revendications 1 à 8, **caractérisé en ce qu'**il existe sur chacun des caches cornières (10, 11), à cet endroit dans la partie inférieure, un palier de fixation (30, 31) pour fixer un indicateur d'encombrement/de largeur (16, 17) articulé en biais au niveau de son extrémité inférieure.

10. Véhicule de voirie d'entretien des chaussées et de service d'hiver selon la revendication 9, **caractérisé en ce que** le palier de fixation (30, 31) prévu pour l'articulation d'un indicateur d'encombrement/de largeur (16, 17) sur chacun des deux caches cornières (10, 11) est constitué d'éléments en saillie dépassant partiellement leur autre contour (26, 27) sur les côtés.

11. Véhicule de voirie d'entretien des chaussées et de service d'hiver selon la revendication 10, **caractérisé en ce que** chaque indicateur d'encombrement/de largeur (16, 17) est logé de manière pivotable autour d'un axe de palier sur chaque cache cornière (10, 11) par le biais d'un oeillet de palier à l'extrémité inférieure entre les deux éléments en saillie latéraux du palier de fixation (30, 31), et **en ce qu'**il existe une butée sur au moins un des deux éléments en saillie sur le côté extérieur ou par le biais d'un montant de liaison une tige de liaison extérieur(e) latéral(e) ou entre les deux éléments en saillie, cette butée délimitant le pivotement de l'indicateur d'encombrement/de largeur (16, 17) dans la position inclinée, par exemple, 45° par rapport à l'horizontale.

12. Véhicule de voirie d'entretien des chaussées et de service d'hiver selon l'une quelconque des revendications 1 à 11, **caractérisé en ce que** les organes de palier (22, 23) pour articuler le mécanisme orientable du capot avant (15) sont disposés sur la face arrière de chacun des deux caches cornières (10, 11) en appui sur leur bord d'extrémité intérieure (32, 33) et **en ce que** le mécanisme orientable du capot avant (15) est constitué, de chaque côté, d'une tringlerie en forme de parallélogramme dont les tiges sont articulées, d'une part, sur les organes de palier (22, 23) côté cache cornière et, d'autre part, sur les organes de palier (34, 35) côté capot avant de telle manière que le capot avant (14) puisse être tout d'abord déplaçable de la paroi avant en position fermée au moment de l'ouverture, puis transposable, par exemple, parallèlement à la paroi avant (7) dans une position finale d'ouverture plus élevée.

13. Véhicule de voirie d'entretien des chaussées et de service d'hiver selon l'une quelconque des revendications 1 à 12, **caractérisé en ce que** les caches cornières (10, 11) sont fabriqués en matière plastique approprié, le cas échéant renforcé par fibres de verre.
